# EUROPEAN PATENT APPLICATION

(11) **EP 0 539 134 A1**
(43) Date of publication of application: **28.04.1993**
(21) Application number: 92309524.4
(22) Date of filing: 19.10.1992
(51) Int. Cl.: A22C 21/06

(54) **Eviscerating spoon**

(30) Priority: 21.10.1991 AU 9038/91
(71) Applicant: LINCO ENGINEERING PTY LIMITED, Seven Hills, New South Wales, 2147 (AU)
(72) Inventor: Hili, Emanuel, Seven Hills, New South Wales 2147 (AU)
(74) Representative: Powell, Stephen David

(57) **Abstract**

An eviscerating spoon (40) is provided which is elongate in formation and includes at least two elongate side arms (41) which are spaced apart at least partway along the length thereof. The side arms (41) are pivotally mounted relative to each other and are spring biased into a first mode in which they form a closed elongate loop. The side arms (41) are pivotally movable away from each other against the spring bias, so as to open said loop.

## Description

This invention relates to an eviscerating spoon, used for removing an intestinal pack from an animal and more particularly from a fowl such as, for example, a chicken which has previously been prepared for drawing and processing.

The intestinal pack of a fowl such as a chicken includes edible offal, such as the gizzard, liver and heart and inedible offal such as, for example, the intestine, gall bladder and crop. The stripping of intestinal packs from chickens which have already been prepared for drawing and processing on an industrial scale, is well known. Such stripping of intestinal packs involves the use of apparatus and machinery which, generally speaking, receive de-feathered carcasses, from which the heads and feet have been removed. Further, the carcasses have usually been prepared by the formation of a cut or slit (such as for example a circular slit) around the fowl's cloaca (vent) and usually by an opening being cut or formed through the skin at the back of the fowl and extending between its breast bone and back bone. Such carcasses are often held on machines or mounting arrangements, with their legs against the outside of a drum, such as for example an axially vertical rotating drum. Such drums are provided with mechanisms and means for positioning the fowl for evisceration by the removal of the intestinal pack.

Such known apparatus and machinery are usually provided with means for operating eviscerating spoons associated with the drum, and which are adapted to be inserted through the opening cut in the fowl so as to scoop the intestinal pack from the interior cavity of the carcass, and to thereafter remove the intestinal pack from the interior cavity of the carcass, so that the intestinal pack is left hanging from the carcass for inspection to establish that the fowl is fit for human consumption.

Such known arrangements are, for example, described in Australian patent specification No 585,887 and European patent specification No 85 850275.0.

It is particularly important in arrangements involving the use of eviscerating spoons that constituent parts of the intestinal pack are not damaged or ruptured during the eviscerating process. Rigorous inspection procedures are carried out (often by government authorities) which can result in the rejection of carcasses associated with damaged or ruptured intestinal packs.

Edible offal has a significant market value, but constituent parts thereof, particularly the liver, can be easily damaged and lose value. Further, perforation of or damage to certain constituent parts of the intestinal pack (such as for example the gall bladder) will result in pungent discolouring and distasteful gall juices being released over the carcass. This can result in the carcass and intestinal pack being rejected. Further, damage to carcasses can occur if the crop bursts (such as during evisceration).

Various forms of eviscerating spoons have been developed up until this time, some of which have attempted to go some way towards overcoming or minimizing the problems outlined above. An example of such an eviscerating spoon is described in Australian patent specification No 585,887 and European patent specification No 85 850275.0 which disclose the use of a substantially unitary eviscerating spoon in which the parts thereof are formed or secured one to the other in a substantially fixed manner. While such arrangements have some advantages, there are also a number of disadvantages associated therewith.

By way of example, such eviscerating spoons are in the form of a fixed elongate loop having outwardly extending and spaced apart fingers at one end thereof, which form a deep notch therebetween, for use in engaging with and catching the lungs and esophagus during the evisceration process.

In the use of such known eviscerating spoons, it has been found that the liver can be damaged as it is pulled back through the hole in the loop after release. Further, because during use the gizzard and liver are positioned on the outside of the loop and require some force to pull them back through the loop (in that they are larger in size than the hole in the loop), the intestinal pack can tend to act like an elastic band, such that sudden retreat of the gizzard and liver through the loop can cause the entire intestinal pack to retreat back into the carcass. This is known as "fall-back" and obviously has substantial disadvantages in that it detracts from the appropriate presentation of the intestinal pack which usually hangs from the carcass. In such circumstances, for example, the presentation of the intestinal pack dangling from a carcass can differ from carcass to carcass, thus making the inspection process more difficult.

In addition, it has been found that in using known eviscerating spoons, the intestinal pack will sometimes break off before the spoon is released from the carcass, resulting in the liver, gizzard and/or part of the intestinal pack falling onto the floor or alternatively remaining with the spoon. It is also possible that any such matter will not be adequately washed during subsequent washing processes, so as to stay with the spoon when it enters another carcass. This might well result in cross contamination. Further, it has been known for the intestinal pack to become tightly wound onto the bottom of the loop of the spoon, such that subsequent operations will further increase the amount of build-up of extraneous matter on the spoon. If, during operation, the gall bladder becomes entangled with spoons known and used up until this time, it may be squashed and break during attempts to remove it, this resulting in staining and carcass contamination.

It is an object of the present invention to provide an eviscerating spoon which goes some way towards overcoming or at least minimizing one or more of the above problems and disadvantages.

Other objects of this invention will become apparent from the following description.

According to one aspect of this invention there is provided an eviscerating spoon, including at least two elongate side arms, laterally spaced apart at least partway along the length thereof, so as to define an elongate loop; at least one of said side arms being pivotally movable relative to the other.

According to a further aspect of this invention there is provided an eviscerating spoon including at least two elongate side arms, laterally spaced apart at least partway along the length thereof, so as to define an elongate loop; said side arms being pivotally movable relative to each other; distal ends of said side arms extending inwardly towards each other; each of said distal ends including at least one outwardly extending finger portion; the arrangement being such that in a first mode said inwardly extending distal ends of said side arms abut one another so as to form an enclosed loop with a notch formed between said outwardly extending finger portions, while in a second mode, said side arms are pivoted away from each other so as to at least partially open said loop.

This invention will now be described with reference to the accompanying drawings wherein:
- Fig. 1: is a general arrangement of an eviscerating apparatus used and known up until this time,
- Fig. 2: is a front view of a substantially unitary and fixed eviscerating spoon known and used up until this time,
- Fig. 3: is a substantially diagrammatic section through a carcass of a chicken being eviscerated by a spoon such as used up until this time and as for example shown in Fig. 2 of the accompanying drawings,
- Fig. 4: is a perspective view of an eviscerating spoon according to one form of the present invention,
- Fig. 5: is a side view of an eviscerating spoon according to one form of the present invention, and
- Fig. 6: is a front view of an eviscerating spoon (along arrow 'A' of Fig. 5) according to one form of the present invention.

This invention will now be described by way of example only and with reference to the accompanying drawings. It should however be appreciated that modifications and improvements may be made to the invention without departing from the scope or spirit thereof, as defined by the appended claims.

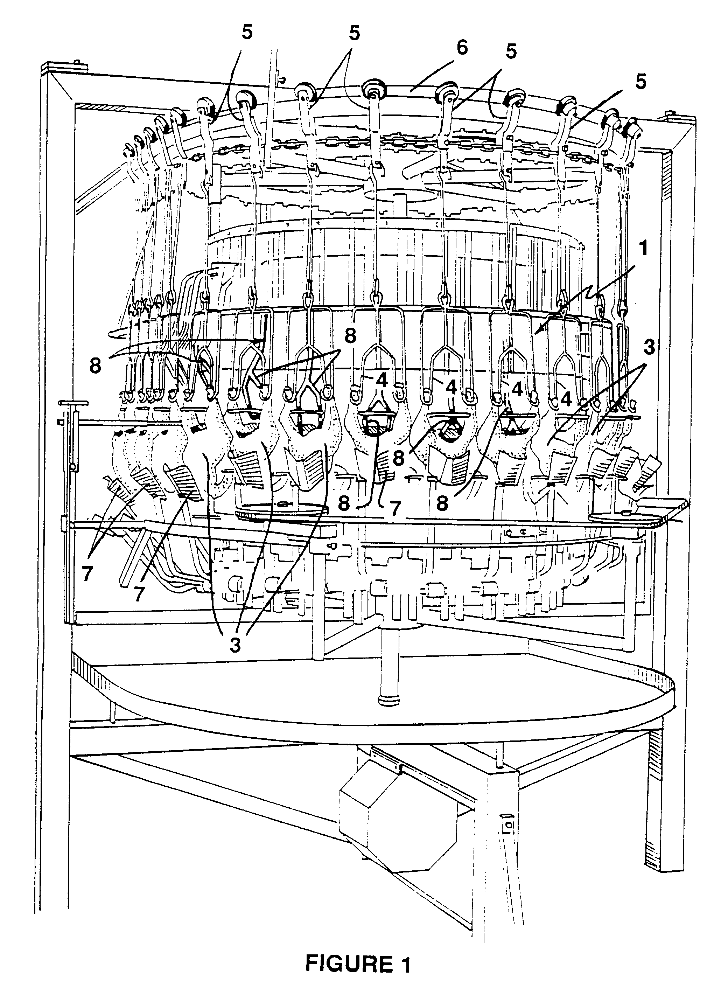

Referring firstly to Fig. 1 of the accompanying drawings, this shows an eviscerating apparatus which has been used for the eviscerating of chickens, such an arrangement for example being made by Lindholst & Co. A/S of Denmark. Such an arrangement is also referred to and generally described in Australian patent specification No 585,887 and European patent specification No 85 850275.0.

In the eviscerating arrangement shown in Fig. 1 of the accompanying drawings an axially vertical drum 1 which is rotated about its vertical axis and which carries with it a tier of chicken carcasses 3, such as an arcuate tier of chicken carcasses 3 supported in an inverted position by respective stirrups 4 hanging from runners 5 which travel around a rail 6. The carcasses are supported against the drum by having their breast bones cupped in plates 7, so that they cannot move or so that movement is restricted while evisceration is being carried out.

As referred to hereinbefore, such apparatus receives defeathered carcasses from which the heads and feet have been removed and which have been prepared for evisceration by the formation of a circular slit cut around the fowl's cloaca (vent) and by an opening having been cut through the skin at the back of the fowl and extending usually between its breast bone and its back bone. The apparatus of Fig. 1 holds the legs against the outside of the rotating vertical drum.

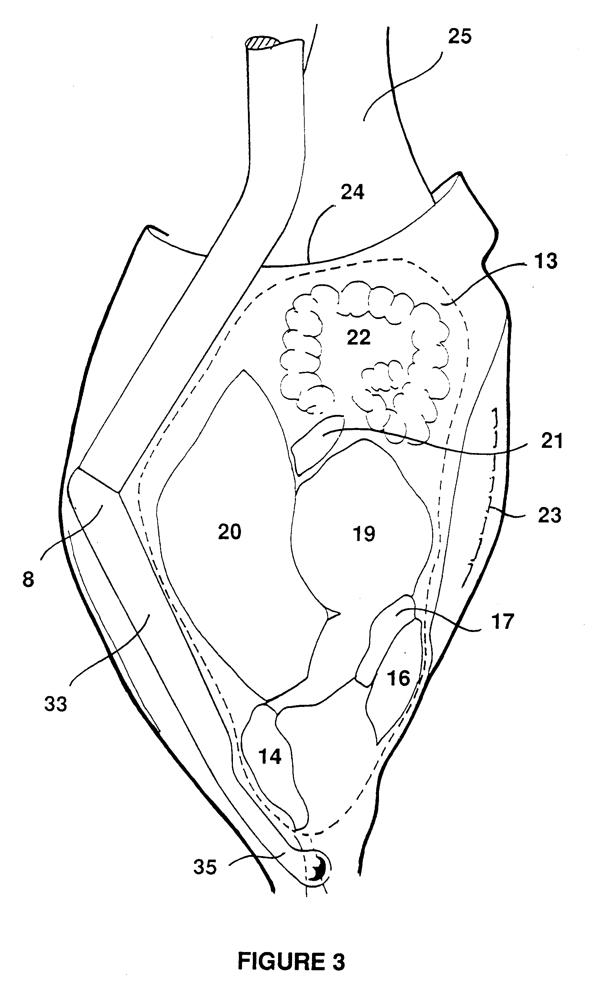

In the arrangement of Fig. 1 the drum 1 is provided with eviscerating spoons 8 above the carcasses and which are guided by cams (not shown) to follow a substantially arcuate path causing lower end portions of the spoon 8 to progressively dip into the carcass interior behind the breast bone as shown by way of example in Fig. 3 of the drawings.

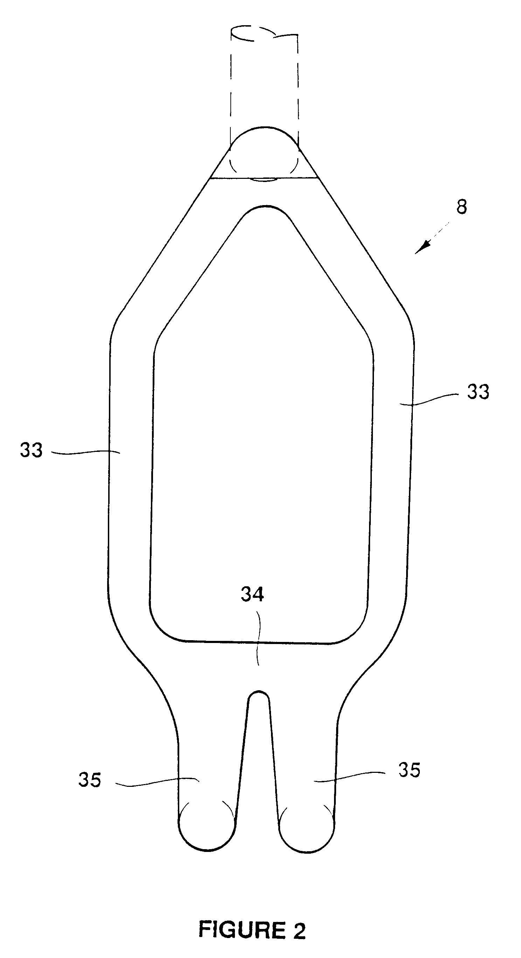

The known fixed spoon 8 is shown in Fig. 2 of the accompanying drawings and is an integral spoon preferably of a cranked formation in which the component parts are fixedly connected one to the other in the form of a unitary formation. The spoon 8 preferably includes spaced apart side arms 33 which define an elongate loop, together with a base 34 from which fingers 35 with rounded ends extend, the fingers 35 being spaced apart so as to form a deep notch therebetween. The notch assists in engagement with constituent parts of the intestinal pack.

In use, and referring to Fig. 3 of the accompanying drawings, the spoon 8 progressively dips into the carcass interior behind the breast bone as shown in Fig. 3 of the drawings. By way of example and for convenience, the intestinal pack 13 as shown in Fig. 3 of the drawings is shown within the dotted outline. It comprises constituents in the form of crop 14, esophagus 15, lungs 16, heart 17, glandular stomach 18, gizzard or muscular stomach 19, liver 20, gall bladder 21 and coiled intestine 22. The positions that these constituents of the intestinal pack occupy within the interior are largely as shown (diagrammatically) in Fig. 3 of the drawings, except that the lungs may be on the left or right of the carcass. A back bone of the carcass is shown at 23 and an opening cut, through which the intestinal pack is listed by the spoon 8, is shown at 24. One thigh of the bird is shown at 25.

As will be appreciated from Figures 1, 2 and 3 of the accompanying drawings, inverted chicken carcasses prepared for drawing are carried around the drum 4 with their breast bones on the outside. They are progressively positioned for drawing, by being cupped by plates 7 against the side of the drum. The eviscerating spoons 8 are moved downwardly to dip into the carcasses along curved operating paths. This movement brings the lower end portion of each spoon 8 downward so that it enters an opening cut at the top of the inverted carcass, with the fingers foremost and then travels downwardly around the inside surface of the breast bone to the position shown in Fig. 3 of the drawings. The motion of the spoon 8 then continues across the carcass interior so that the fingers gather, in the notch therebetween, the esophagus. The fingers then travel up the back bone of the carcass so that the intestinal pack 13 is gathered over the centre of the spoon and drawn out of the top of the carcass. During the upward travel of the spoon 8, the lungs 16 are either freed from the carcass by the spoon so that they are lifted with the rest of the intestinal pack 13, or are loosened to the extent that they are withdrawn at a later stage in the lifting process when, for example, the crop 14 is pulled.

The withdrawal of the spoon 8 from the carcass allows the intestinal pack 13 to hang through the spoon instead of bulging over its edges at positions where it is prone to damage from being crushed between the sides of the spoon and the inside walls of the carcass cavity. When drawing is completed and the spoon 8 has reached the end of its operating movement, a cam action associated with the apparatus shown in Fig. 1 pushes the spoon 8 away from the carcass so that the intestinal pack 13 is released from the spoon's end portions and left dangling over the side of the carcass for quality inspection.

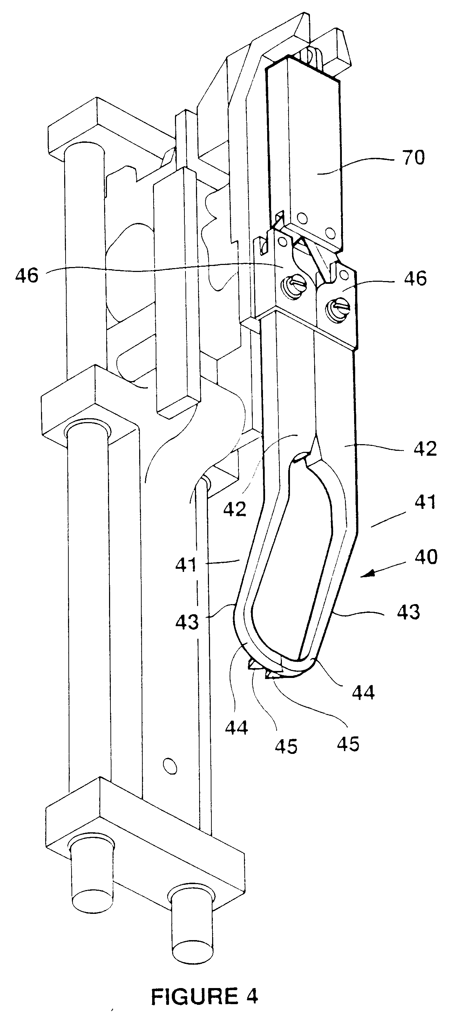

As described hereinbefore, the known arrangement as generally described with reference to figures 1, 2 and 3 of the accompanying drawings, has a number of disadvantages associated therewith. The present invention sets out to overcome or at least minimize those disadvantages by providing an eviscerating spoon having elongate side arms defining an elongate loop, but wherein (rather than being of a unitary formation wherein the components are fixedly and integrally formed) one or both of the side arms are pivotally mounted relative to the other. It has been found that this provides a substantial advance over known eviscerating spoons such as those described hereinbefore with reference to Figures 1, 2 and 3 of the drawings. In particular, in using the eviscerating spoon of the present invention (and as will be described further with reference to Figures 4, 5 and 6 of the accompanying drawings) at the point where the eviscerating spoon is to release the intestinal pack, the loop is able to be opened (by one or more of the arms moving relative to the other), this allowing the intestinal pack to hang down behind the carcass with none of the disadvantages and problems associated with known eviscerating spoons and as referred to (by way of example) above. Further, by one or more of the arms being pivotally mounted relative to the other and associated with appropriate spring means, there is able to be some relative movement of the side arms as the spoon of the present invention is drawn out of the bird; that is, compared with the fixed spoon as known and used up until this time. This clearly has substantial advantages, in that the pivoted arms are able to move as the loop is drawn out of the bird, thus minimizing rib breakages (which could occur with fixed spoons) and again overcoming or minimizing the problems and disadvantages discussed hereinbefore.

Referring now to Figures 4, 5 and 6 of the accompanying drawings, these show one form of an eviscerating spoon 40 according to the present invention. It should be appreciated however that such eviscerating spoons will in one form of the invention be used with an eviscerating apparatus such as that generally shown and described with reference to Fig. 1 of the drawings. Further, the operation of the eviscerating spoon 40 of the present invention will be very much the same as that described with reference to Fig. 3 of the accompanying drawings, except in that the eviscerating spoon 40 used will be according to the present invention rather than being a known eviscerating spoon 8 as described with reference to Fig. 3 of the drawings.

The eviscerating spoon 40 shown in Figures 4, 5 and 6 of the drawings includes at least two elongate side arms 41 which include a head portion 42 and an integrally formed and outwardly extending tail portion 43, each tail portion 43 being turned or curved substantially inwardly adjacent its distal end so that the distal ends 44 of the tail portions of the arms extend inwardly at an angle relative to the longitudinal axes of the head and tail portions 42, 43 thereof. Further, the tail portions 43 of the side arms 41 are angled so as to extend at an oblique angle relative to the head portions 42 thereof.

The side arms 41 are so formed, that in one mode, the tail portions 43 thereof are laterally spaced apart one from the other partway along the lengths thereof so as to define an elongate loop.

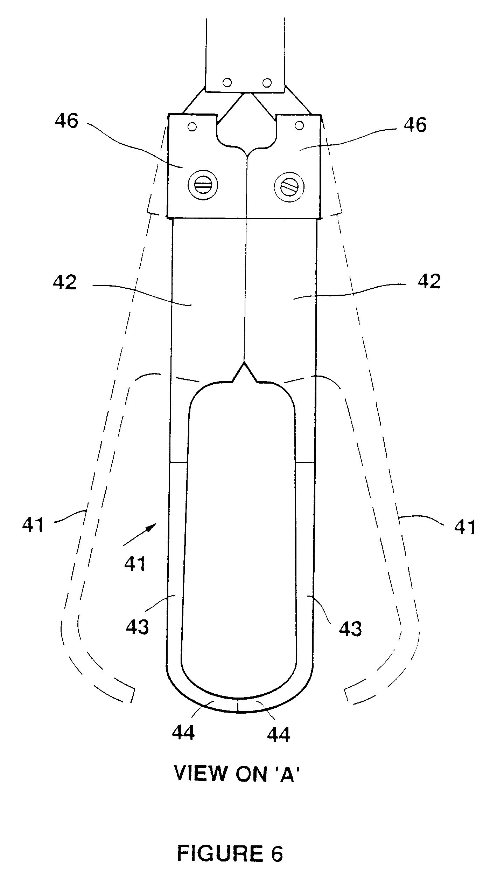

As shown in Figures 4 and 6 of the accompanying drawings, when the eviscerating spoon 40 is in a first mode defining a substantially closed elongate loop, inwardly extending ends 44 of the tail portions 43 of the side arms abut or are engaged one with the other, so that an elongate enclosed loop is enclosed. Spring bias means are provided (which will be described hereinafter) which spring bias the side arms 43 into a position in which, in the first mode, the inwardly extending ends 44 of the side arms 43 are in abutment so as to form the enclosed loop. Adjacent end portions of the inwardly extending ends 44 of the side arms 41 can be angled and/or mitred so as to engage one with the other, or alternatively one or both ends can be provided with one or more recesses and/or pins so that the end portions can engage one with the other.

The inner surfaces 44a of the angled end portions 44 are provided with outwardly extending finger portions 45, integrally formed therewith, so that when the side arms 43 are in juxtaposition one with the other, so as to define a substantially enclosed loop as shown in Figures 4 and 6 of the accompanying drawings, a notch or recess will be defined therebetween, for use when the eviscerating spoon 40 is drawing the intestinal pack out of the carcass.

The side arms 41 are preferably each pivotally mounted as at 46 at upper head ends 42 thereof, the pivotal mounting being connected to an elongate rod 47 which is spring biased by means of appropriate spring means 48, so as to normally urge the side arms 41 into a position in which they form an enclosed loop (substantially as shown in Fig. 4 of the accompanying drawings). The spring bias rod 47 is connected by means of appropriate connections or limbs 49 to upper ends of the side arms 41, and is also associated with an appropriate cam or actuating trigger 50 so that on the drum 70 (as described with reference to Fig. 1 of the accompanying drawings) rotating and on the eviscerating spoon 40 being withdrawn from within the carcass, the rod 47 will be depressed against the spring bias of spring means 48, to open the side arms 41 so that they are pivoted relative to each other, thus opening the loop to serve the advantages referred to hereinbefore. Further, appropriate spring adjustment means can be provided so that the tension between the side arms is adjustable. This then allows for some movement or "play" between the side arms 41 as the eviscerating spoon is drawn out of the carcass, so that the arms 41 are able to move or "flex" slightly to provide the advantages referred to hereinbefore and prevent or minimise rib breakages and the unnecessary destruction or breaking of component parts of the intestinal pack.

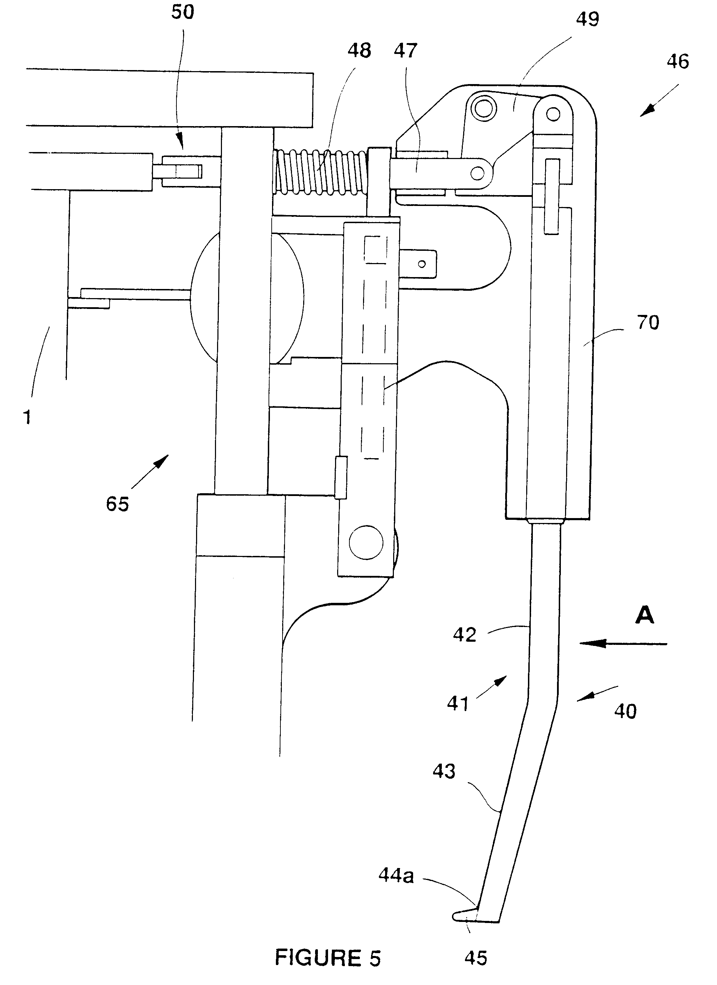

Reference to Fig. 6 of the accompanying drawings will show, by way of example only (in broken lines), positioning of the side arms 41 in a second mode, pivoted away from each other, so as to provide an open loop, so as to allow for release of the intestinal pack, following actuation of the spring biased shaft which has caused the side arms 41 to move from a first mode (as shown in dark lines in Fig. 6 of the drawings and shown in Fig. 4 of the drawings) into the second mode (shown in dotted lines in Fig. 6 of the drawings). This will enable the release of the intestinal pack. On further movement of the drum 1 as described with reference to Fig. 1 of the accompanying drawings and as shown also in Fig. 5 of the drawings, the pressure on the spring biased rod and lever will be relaxed allowing the spring bias to return the side arms 41 through the linkages, to their first mode in which the end portions thereof abut, and in which they define a substantially enclosed elongate loop.

Referring to Figures 4 and 5 of the accompanying drawings, appropriate and/or known mounting means 65 are provided to mount the eviscerating spoon relative to the drum 1, and a housing cover 70 can be provided extending over the upper ends of the side arms and covering their pivotal engagement or mounting relative to each other.

While the invention has been described by way of example only with reference to the side arms each being pivotally mounted relative to the other, it is envisaged that in a further form of the invention (not shown in the drawings), only one side arm could be pivotally mounted relative to the other, so as to enable the loop to be opened and closed. It should be appreciated that any appropriate means for operating the pivotal movement of the side arms relative to one another can be employed.

It should be appreciated that improvements and modifications may be made to the invention without departing from the scope or spirit thereof as defined by the appended claims.

## Claims

1. An eviscerating spoon (40), including at least two elongate side arms (41), laterally spaced apart at least partway along the lengths thereof, so as to define an elongate loop; at least one of said side arms (41) being pivotally movable relative to the other.

2. An eviscerating spoon (40) including at least two elongate side arms (41), laterally spaced apart at least partway along the lengths thereof, so as to define an elongate loop; said side arms (41) being pivotally mounted relative to each other; distal ends (44) of said side arms (41) extending inwardly towards each other;
the arrangement being such that in a first mode said inwardly extending distal ends (44) of said side arms (41) abut one another so as to form an enclosed loop;
while in a second mode, said side arms (41) are pivoted away from each other so as to at least partially open said loop.

3. An eviscerating spoon (40) as claimed in claim 1 or claim 2, wherein each of said side arms (41) is pivotally mounted relative to the other; each arm (41) including a head portion (42) and an integrally formed and outwardly extending tail portion (43); said tail portions (43) being at an oblique angle to said head portions (42); said tail portions (43) being laterally spaced apart one from the other, substantially along the lengths thereof; distal ends (44) of said tail portions (43) extending inwardly towards each other so that in a first mode they abut one another such as to form an enclosed loop.

4. An eviscerating spoon (40) as claimed in claim 3, wherein inner surfaces (44a) of each distal end (44) of said tail portions (43) are each provided with an inwardly extending finger (45) such that, when in said first mode, the ends (44) abut each other, so as to form an enclosed loop, the fingers (45) are adjacent to but spaced apart from each other, so as to define a notch or recess therebetween.

5. An eviscerating spoon (4) as claimed in any one of the preceding claims, wherein said side arms (41) are each pivotally mounted relative to the other and including spring means (48) to spring bias said side arms (41) into a first mode wherein said side arms (41) define an elongate closed loop.

6. An eviscerating spoon (40) as claimed in claim 5, wherein means are provided to permit adjustment of the pressure/bias of the said spring means (48).

7. An eviscerating spoon (40) as claimed in any one of the preceding claims, wherein both said side arms (41) are pivotally movable relative to each other and normally spring biased into a position in which they define a closed loop; including actuating means (47, 50), operation of which moves the side arms (41) outwardly away from each other against said spring bias to open said loop, and deactuation of which will cause said spring biased arms (41) to return to a position in which they define a closed loop.
